# EUROPÄISCHE PATENTSCHRIFT

(11) **EP 0 327 047 B1**
(45) Veröffentlichungstag und Bekanntmachung des Hinweises auf die Patenterteilung: **03.05.1995**
(21) Anmeldenummer: 89101693.3
(22) Anmeldetag: 01.02.1989
(51) Int. Cl.: C08L 27/12, C08K 5/29, C09D 127/12, D06M 15/256

(54) **Mittel zur Beschichtung mit Fluorpolymeren**
Composition for coating with fluoropolymers
Compositions pour revêtements avec des fluoropolymères

(30) Priorität: 04.02.1988 DE 3803226
(43) Veröffentlichungstag der Anmeldung: 09.08.1989
(73) Patentinhaber: HOECHST AKTIENGESELLSCHAFT, 65926 Frankfurt am Main (DE)
(72) Erfinder: Jahn, Bernhard, D-8933 Obermeitingen (DE)

(56) Entgegenhaltungen:
- US-A- 3 071 565
- US-A- 3 300 425

## Beschreibung

Die vorliegende Erfindung betrifft eine wäßrige Fluorpolymerenzubereitung und ihre Herstellung, die es gestattet, auf Textilmaterialien aus organischen Synthesefasern fest haftende Fluorpolymerüberzüge zu erzeugen.

Aus der europäischen Patentanmeldung 0 224 262 ist es bekannt, flächenförmige Textilmaterialien auf beiden Seiten mit einem Polyvinylfluoridüberzug zu kaschieren. Bei diesem bekannten Verfahren wird eine Lösung des Polymeren in einem organischen Lösungsmittel auf einem Transportband zu einer dünnen Schicht ausgegossen, die durch Wärmezufuhr zum Vergelen gebracht wird. Die Gelschicht wird dann auf die Oberfläche des zu kaschierenden Textilmaterials aufgepreßt. Bei diesem Verfahren ist der Fluorpolymerüberzug nur oberflächlich auf dem Textilmaterial fixiert und es tritt praktisch keine Imprägnierung der Einzelfilamente mit dem Fluorpolymeren auf.

Aus der deutschen Offenlegungsschrift 33 01 270 ist ein Verfahren bekannt zum Ummanteln von Faser- bzw. Filamentgarnen mit einem fluorhaltigen Polymeren. Bei diesem aufwendigen Verfahren wird das zu ummantelnde Filament durch eine zentrale Bohrung in einer Ringspinndüse gezogen, während gleichzeitig aus der Ringspinndüse ein Fluorpolymerenschlauch extrudiert wird. Der extrudierte Schlauch umgibt daher das aus der zentralen Bohrung ausgezogene Filament als ein lose aufsitzender Mantel. Eine feste Bindung zwischen dem Fluorpolymerschlauch und dem davon ummantelten Filament tritt nicht ein.

Es ist auch bekannt, zur Herstellung von Planen, Traglufthallen, flexiblen Behältern und ähnlichen Produkten textile Flächengebilde, meist Gewebe, vorzugsweise solche aus synthetischen organischen Fasern oder Filamenten mit Polymermassen, meist mit Polyvinylchlorid (PVC) zu beschichten. Diese Beschichtung erfolgt durch Imprägnieren der Textilmaterialien in Suspensionen des Polyvinylchlorids in organischen Flüssigkeiten. Hierbei werden auch die Einzelfilamente des Textilmaterials von dem Polyvinylchloridüberzug eingehüllt. Um eine ausreichende Haftung zwischen dem Polyvinylchloridüberzug und den Synthesefasern zu erreichen, erfolgt die Beschichtung in zwei Stufen: als Haftstrich wird zuerst eine Mischung einer PVC-Paste oder -Suspension mit einem Haftvermittler aufgetragen und anschließend erfolgt der Deckstrich mit einer reinen PVC-Zubereitung. Die für dieses Verfahren geeigneten Haftvermittler sind bekannt. Meistens werden Zweikomponenten-Haftmittel eingesetzt, bestehend aus einer mehrere Hydroxylgruppen aufweisenden organischen Substanz, vorzugsweise einem hydroxylgruppenhaltigen Polyester und einer mehrere Isocyanatgruppen aufweisenden organischen Substanz.

Es ist auch bereits bekannt, Materialien wie Fäden oder Flächengebilde aus organischen Synthesefasern mit Fluorpolymeren zu beschichten, um ihren Oberflächen besonders vorteilhafte Eigenschaften, wie z.B. geringen Reibungskoeffizient, hohe chemische Beständigkeit und schmutzabweisende Wirkung zu verleihen. Hierzu werden die Synthesefasermaterialien mit handelsüblichen wäßrigen Dispersionen von Fluorpolymeren imprägniert oder eingestrichen und der erhaltene Polymerauftrag durch eine Hitzebehandlung fixiert.

Aus der US-A-3,071,565 ist ein Verfahren bekannt, kettenförmige, elastomere oder thermoplastische Chlor-fluor-polymere, wie z.B. Homo- oder Copolymere aus 2-Chlor-perfluorpropylen, Chlor-trifluorethylen, Brom-trifluorethylen, Trifluorethylen, Chlor-fluorethylen und Vinylidenfluorid, in räumlich vernetzte Polymere zu überführen um ihre Löslichkeit und ihr thermoplastisches Fließen zu reduzieren und die Elastomeren quasi einer milden Vulkanisation zu unterwerfen.
Dieses Ziel wird gemäß dieser Patentschrift dadurch erreicht, daß man die Chlor-fluor-polymere mit Polyisocyanaten in Gegenwart von Feuchtigkeit reagieren läßt. Die Druckschrift gibt jedoch keinerlei Hinweise auf die Beschichtung von Fasermaterialien mit Fluorpolymeren und spricht die Probleme der Haftung zwischen Fluorpolymeren und Synthesefasern in keiner Weise an.

Um Jedoch Verbundmaterialien aus Synthesefasern mit Fluorpolymeren einem weiten Anwendungsfeld zugänglich zu machen, wie z.B. der Herstellung von Membranen für textiles Bauen, flexible Behälter, Transportbänder und Gewebeschläuche, ist eine ausreichende Haftfestigkeit des Fluorpolymers auf der Synthesefaser eine unabdingbare Voraussetzung. Unter Haftfestigkeit ist dabei der Trennwiderstand von Träger und Beschichtung eines 5 cm breiten Streifens zu verstehen, wie er in Anlehnung an DIN 53 530 bestimmt wird. Eine ausreichende Gebrauchstüchtigkeit des Verbundes ist dann gewährleistet, wenn je nach geplanter Anwendung Haftwerte von 10 bis 15 daN/5 cm erreicht werden.

Die Erzeugung von festhaftenden Fluorpolymerüberzügen auf Synthesefasermaterialien bereitet jedoch noch weit größere Schwierigkeiten als die Erzeugung von Polyvinylchloridüberzügen. Es zeigt sich nämlich, daß Fluorpolymere gegenüber Synthesefasern, wie z.B. Polyesterfasern, Polyamidfasern oder Aramidfasern weit inerter sind als Polyvinylchlorid, d.h. daß sie sehr wenig Neigung zeigen, mit den Synthesefaseroberflächen haltbare physikalische oder chemische Bindungen einzugehen. Hinzu kommt, daß Fluorpolymere, die von ihren physikalischen Daten her als Überzugsmittel für Synthesefasern in Betracht kommen könnten, in der Regel in Form wäßriger Dispersionen oder Pasten in den Handel kommen. Es gelingt daher nicht, unter Verwendung dieser bekannten Fluorpolymeren-Dispersionen oder -Pasten, Überzüge mit einer für alle oben genannten technischen Einsatzgebiete ausreichenden Haftfestigkeit auf Synthesefasermaterialien herzustellen.

Es gelingt auch nicht, eine nennenswerte Haftungsverbesserung der Fluorpolymerenüberzüge durch Einsatz der bei der Herstellung von PVC-Überzügen mit Erfolg verwendeten Ein- oder Zweikomponenten-Haftvermittler zu erreichen.

Überraschenderweise wurde nun gefunden, daß sich sehr gut haftenden Fluorpolymerbeschichtungen auf Synthesefasern herstellen lassen, wenn zumindest die erste Imprägnierung oder der erste Aufstrich (Haftstrich) mit einer Fluorpolymerzubereitung erfolgt, die anstelle herkömmlicher Haftvermittler lediglich eine mehrere Isocyanatgruppen aufweisende organische Verbindung enthält.

Ein Gegenstand der vorliegenden Erfindung ist somit eine wäßrige Fluorpolymerzubereitung enthaltend in feiner Verteilung 25 bis 60 Gew.-% eines Fluorpolymers, 1 bis 5 Gew.-% einer mindestens zwei, vorzugsweise 2 bis 4 Isocyanatgruppen aufweisenden organischen Verbindung und gegebenenfalls bis zu 10 Gew.-% Hilfs- oder Zusatzstoffe.

Die Fluorpolymeren der erfindungsgemäßen Zubereitung enthalten mindestens 40 Gew.-% Tetrafluorethylen-Baugruppen und bis zu 60 Gew.-% Baugruppen, die sich von anderen, mit Tetrafluorethylen copolymerisierbaren, ungesättigten, fluorhaltigen Monomeren ableiten. Zweckmäßigerweise wählt man Menge und Art der mit dem Tetrafluorethylen copolymerisierten fluorhaltigen Monomeren so, daß das Copolymerisat die gewünschten mechanischen Daten, wie Festigkeit, Flexibilität, Elastizität, niedrige Gleitreibung sowie gute chemische Resistenz aufweist. Insbesondere sollte die Zusammensetzung so gewählt werden, daß das Fluorpolymer in Wasser gut dispergierbar ist und auch langzeitbeständige Dispersionen ergibt. Bevorzugt sind dabei solche Fluorpolymeren, deren Schmelzpunkt unterhalb des Schmelzpunktes der mit der Zubereitung auszurüstenden Synthesefasern liegt. Insbesondere sind hier solche Fluorpolymeren von Vorteil, deren Schmelzpunkt 5 bis 50°, vorzugsweise 20 bis 40°C unter dem Schmelzpunkt der auszurüstenden Synthesefasern liegt.

Gut geeignet im Sinne der obigen Spezifikationen sind Tetrafluorethylencopolymerisate, die bis zu 60 % Baugruppen enthalten, die sich von Hexafluorpropylen und Vinylidenfluorid ableiten. Ein zur Herstellung der erfindungsgemäßen Fluorpolymerzubereitung besonders geeignetes Fluorpolymer enthält 40 bis 60 Gew.-% Tetrafluorethylenbaugruppen, 10 bis 30 Gew.-% Hexafluorpropylenbaugruppen und 20 bis 40 Gew.-% Vinylidenfluoridbaugruppen.

Die Herstellung derartiger Fluorpolymeren ist bekannt und zahlreiche Vertreter dieser Verbindungsklasse sind im Handel. Besonders gut geeignet zur Herstellung der erfindungsgemäßen Fluorpolymerzubereitung und zur Erzeugung von festhaftenden Fluorpolymerüberzügen auf Synthesefasern sind die von der Hoechst AG in den Handel gebrachten ^{(R)}Hostaflon TFB-Typen.

Organische Verbindungen mit mehreren Isocyanatgruppen, die in die erfindungsgemäßen Fluorpolymerzubereitungen als Haftvermittler eingearbeitet werden können, sind in großer Zahl bekannt und zahlreiche Vertreter dieser Verbindungsklasse sind Handelsware. Eine Reihe technisch wichtiger und auch für den erfindungsgemäßen Einsatz geeigneter Tri- und Polyisocyanate kann beispielsweise Ullmanns Enzyklopädie der technischen Chemie, 4. Auflage, Bd. 13, Seite 355, Bd. 15, Seite 634 sowie Bd. 19, Seite 303 und 304 entnommen werden. Selbstverständlich sind darüberhinaus auch andere, in wäßrigen Systemen dispergierbare und hinreichend stabile Di- und Polyisocyanate für den Einsatz in der erfindungsgemäßen Fluorpolymerzubereitungen geeignet. Bevorzugte Di- und Polyisocyanate sind beispielsweise die Isomeren 2,4-Di-isocyanato-toluole und ihre Mischungen, 1,5-Di-isocyanato-naphthalin, Di-isocyanato-diphenylmethan und seine technischen Isomerenmischungen, dimerisiertes und trimerisiertes 2,4-Di-isocyanato-toluol, Addukte von Di-isocyanato-toluol mit Trimethylolpropan und Tris-[isocyanatohexyl]-biuret. Besonders bevorzugt für den Einsatz in den erfindungsgemäßen Fluorpolymerzubereitungen sind die genannten Derivate des Di-isocyanato-toluols, insbesondere sein Dimerisationsprodukt, welches von der Firma Bayer AG unter dem Namen ^{(R)}Desmodur TT in den Handel gebracht wird.

Als Zusatzstoffe können in den erfindungsgemäßen Fluorpolymerzubereitungen verschiedene Hilfs- und Zusatzstoffe enthalten sein. Als solche kommen insbesondere grenzflächenaktive Mittel (Tenside) in Betracht, die als Netzmittel bei der Herstellung der Zubereitungen und bei ihrer Applikation dienen können und Dispergiermittel die die Herstellung der Feinverteilung von Fluorpolymeren und cyanatgruppenhaltigen Verbindungen in der wäßrigen Phase erleichtern bzw. ermöglichen und die die Dispersionsstabilität erhöhen. Auch derartige grenzflächenaktive Mittel sind in der Literatur in großer Zahl beschrieben worden.

Wir verweisen z.B. auf Ullmanns Enzyklopädie der technischen Chemie, 4. Auflage, Band 22, Seite 455 ff. insbesondere Seiten 466 und 488 sowie Band 23, Seite 120. Beispielsweise können anionische, kationische oder amphotere Tenside eingesetzt werden, vorzugsweise aber nichtionische, die sich von Oxethylaten, endständig blockierten Oxethylaten, Fettsäureestern und Polyhydroxyverbindungen ableiten. In Betracht zu ziehen sind auch Tenside auf Silikonbasis oder Fluortenside. Soll eine erfindungsgemäße Fluorpolymerenzubereitung mit relativ niedriger Fluorpolymerenkonzentration und entsprechend niedriger Viskosität eingesetzt werden, so kann es zweckmäßig sein, als Hilfs- und Zusatzstoff auch ein Verdickungs- oder Antimigrationsmsittel zuzusetzen, wie z.B. Mittel aus der Gruppe der carboxymethylierten Polysaccharide, Xanthane oder Alginate, der Stärke- oder Zellulosederivate, der Acrylatcopolymerisate oder des Polyvinylalkohols. Auch anorganische Verdickungsmittel in geringer Konzentration wie pyrogene Kieselsäure oder Bentonite können der erfindungsgemäßen Fluorpolymerenzubereitung einverleibt werden.

Für spezielle Anwendungszwecke, insbesondere für den Deckstrich, können auch Gemische der erfindungsgemäßen Zubereitungen mit anwendungsspezifischen Mischungskomponenten zum Einsatz kommen. Solche Mischungskomponenten sind z.B. Pigmente, Füllstoffe, flammhemmende Mittel und Modifizierungsmittel, die die Eigenschaften des Fluorpolymerüberzugs modifizieren können, wie z.B. Weichmacher, Gleitmittel oder die Oberflächeneigenschaften modifizierende Mittel. Diese können den erfindungsgemäßen Zubereitungen in einer Gesamtmenge bis zu 25 Gew.-%, vorzugsweise bis zu 15 Gew.-% einverleibt werden. Es ist jedoch zweckmäßig, diese zweite Gruppe von Zusatzstoffen in erfindungsgemäßen Zubereitungen, die für den ersten Strich (den Haftstrich) eingesetzt werden sollen, nicht zu verwenden.

Es ist selbstverständlich zweckmäßig und besonders bevorzugt, die Menge der Hilfs- oder Zusatzstoffe in den erfindungsgemäßen Fluorpolymerzubereitungen so zu wählen daß der durch diese Zusätze beabsichtigte Effekt in Optimalem Maß erzielt wird.

Die Herstellung der erfindungsgemäßen
Fluorpolymerenzubereitung erfolgt in an sich bekannter Weise indem man zur Herstellung von 100 Gewichtsteilen der Zubereitung 25 bis 60 Gewichtsteile des Fluorpolymeren, 1 bis 5 Gewichtsteile der mindestens zwei Isocyanatgruppen aufweisenden organischen Verbindung und gegebenenfalls bis zu 10 Gewichtsteile weitere Hilfs- oder Zusatzstoffe in feiner Verteilung mit der diese Bestandteile auf 100 Gewichtsteile ergänzenden Menge Wasser in einem geeigneten Mischaggregat homogenisiert. Wird dabei von festen Fluorpolymeren ausgegangen, so sind diese zuvor in möglichst feine Verteilung zu überführen und anschließend in der erforderlichen Wassermenge, falls notwendig unter Zusatz einer ausreichenden Menge von Dispergierhilfsmitteln und/oder Netzmitteln, unter kräftigem Rühren oder Kneten in eine gleichmäßige Dispersion oder Paste zu überführen. Gleichzeitig oder anschließend wird die erforderliche Menge der ausgewählten, mehrere Cyanatgruppen enthaltenden organischen Verbindung zugefügt.

Die Mischoperation wird zweckmäßigerweise bei Normaltemperatur oder nur mäßig erhöhter Temperatur durchgeführt. Weitere Zusatz- oder Hilfsstoffe können den Mischungsansätzen von Anfang an zugesetzt werden oder sie können nach Erhalt einer stabilen Fluorpolymeren-Dispersion bzw. -Paste in diese eingearbeitet werden.

Zweckmäßig erfolgt die Herstellung der erfindungsgemäßen Fluorpolymerzubereitungen in der Weise, daß man in eine wäßrige Fluorpolymersuspension oder Fluorpolymerpaste die gegebenenfalls weitere Hilfs- oder Zusatzstoffe enthält, 1 bis 5 Gew.-%, bezogen auf das Endgewicht der Mischung der mindestens zwei Isocyanatgruppen enthaltenden organischen Substanz in feiner Verteilung einarbeitet und homogenisiert. Wäßrige Fluorpolymersuspensionen oder -pasten, die sich zur Herstellung der erfindungsgemäßen Zubereitungen gut eignen sind z.B. die handelsüblichen, bereits oben erwähnten ^{(R)}Hostaflon TFB-Typen.

Textilmaterialien im Sinne dieser Erfindung können ein- oder zweidimensional sein, d.h. es sind Fäden oder auch flächenförmige Gebilde wie z.B. Gewebe, Gewirke, Gelege oder Vliese unterschiedlicher Stärke, aber auch Schichtstoffe gleicher oder verschiedener solcher Flächengebilde, eventuell in Kombination mit anderen Rohstoffen.

Die Filamente oder Fasern der zu beschichtenden Textilmaterialien können gefärbt oder ungefärbt, glatt oder texturiert sein. Eine Migration handelsüblicher Textilfarbstoffe aus den Synthesefasern in der Fluorpolymerenüberzug ist nicht festzustellen.

Die erfindungsgemäße Fluorpolymerenzubereitung kann prinzipiell in einem Arbeitsgangs auf das zu beschichtende Synthesefasermaterial aufgebracht werden. Zur Herstellung stärkerer Fluorpolymerschichten wird die erfindungsgemäße Fluorpolymerzubereitung zweckmäßigerweise in mehreren Arbeitsgängen aufgebracht, wobei je nach der gewählten Zusammensetzung der Zubereitung und der damit zusammenhängen Konsistenz eine Imprägnierung durch Tauchen oder Pflatschen oder aber ein Pastenauftrag, z.B. durch Aufrakeln oder Aufwalzen ausgeführt werden kann. Bei dieser zweckmäßigen Applikation der erfindungsgemäßen Zubereitung ist es besonders vorteilhaft, den ersten Auftrag, d.h. die Herstellung des sogenannten Haftstrichs mit einer erfindungsgemäßen Fluorpolymerzubereitung auszuführen, die außer der mehrere Isocyanatgruppen aufweisenden organischen Verbindung keine oder nur wenig sonstige Zusätze, insbesondere keine Feststoffzusätze, wie z.B. Pigmente oder flammhemmende Zusätze enthält.

Es ist auch möglich zur Herstellung von Fluorpolymerenüberzügen auf organischen Synthesefasern die erfindungsgemäße Fluorpolymerzubereitung ausschließlich zur Herstellung des Haftstrichs einzusetzen und den Deckstrich oder die Deckstriche mit einer normalen wäßrigen Fluorpolymerdispersion oder -paste, die frei ist von isocyanatgruppenhaltigen organischen Verbindungen, die jedoch selbstverständlich weitere Zusätze, wie z.B. Dispergiermittel, Netzmittel, Pigmente, Flammschutzmittel oder andere Füll- und Hilfsstoffe enthalten kann, auszuführen.

Wie oben bereits gesagt ist es auch möglich, die Fluorpolymerenausrüstung unter Verwendung einer erfindungsgemäßen Fluorpolymerenzubereitung in einem einzigen Arbeitsgang, beispielsweise durch Imprägnieren, auszuführen, was insbesondere bei der Applikation auf Fäden aus synthetischen Filamenten oder Fasern von Vorteil ist. Bei der Applikation der erfindungsgemäßen Fluorpolymerenzubereitung wird in der Regel nach jedem Auftrag durch Imprägnierung oder Aufstrich eine Wärmebehandlung des Materials zur Trocknung des Auftrags und zur Fixierung des frisch aufgebrachten Fluorpolymeren auf der Unterlage ausgeführt.

Die nach den oben angegebenen Applikationsmethoden aufgebrachten Fluorpolymerüberzüge weisen eine gute Haftfestigkeit von mindestens 10 daN/5 cm, bei Einsatz bevorzugter erfindungsgemäßer Zubereitungen in der Regel mehr als 20 daN/5 cm auf. Die Haftfestigkeit des Fluorpolymeren auf der Synthesefaser kann gesteuert werden durch die Menge der zugesetzten, zwei oder mehrere Isocyanatgruppen enthaltenden organischen Verbindung. Weiterhin läßt sich die Haftfestigkeit durch die Temperatur und die Zeit der nach dem Auftragen der erfindungsgemäßen Zubereitung durchgeführten Hitzebehandlung beeinflussen.

Ein Gegenstand der vorliegenden Erfindung sind auch die mit der erfindungsgemäßen fluorpolymeren Zubereitung beschichteten textilen Flächengebilde, wie z.B. Geweben, Gewirken, Gelegen oder Vliesstoffen aus Synthesefasern, vorzugsweise Polyester, Polyamid oder Aramidfasern insbesondere Polyesterfasern. Als textile Flächengebilde im Sinne der vorliegenden Erfindung sind auch Schichtstoffe gleicher oder verschiedener Flächengebilde eventuell auch in Mischung mit anderen Rohstoffen anzusehen. Die beschichteten Flächengebilde zeichnen sich dadurch aus, daß sie zumindest in der unmittelbar an die Faseroberfläche angrenzenden Fluorpolymerenschicht einen oder mehrere haftvermittelnde Bestandteile aufweisen, die sich von einer mindestens zwei Isocyanatgruppen aufweisenden organischen Verbindung ableiten. Ferner zeichnen sich die erfindungsgemäßen fluorpolymerbeschichteten Textilmaterialien aus Synthesefasern dadurch aus, daß die Beschichtung eine Haftfestigkeit, gemessen in Anlehnung an DIN 53 530, von mindestens 10 daN/5 cm beträgt. Aufgrund der hohen mechanischen Festigkeitseigenschaften der Polyester-, Polyamid- oder Aramidfasern weisen die erfindungsgemäß fluorpolymerbeschichteten Materialien auch ausgezeichnete mechanische Festigkeitswerte auf, die den Bereich ihrer technischen Einsatzmöglichkeiten sehr stark ausweiten.

Außerdem zeigen die beschichteten Materialien geringe Reibungskoeffizienten, hohe chemische Beständigkeit und sie sind schmutzabweisend.

Ein weiterer Gegenstand der vorliegenden Erfindung sind die mit der erfindungsgemäßen Fluorpolymerenzubereitung beschichteten Fäden aus Synthesefasern. Unter Fäden sind hierbei zu verstehen Monofile, multifile Garne, oder auch Spinnfasergarne. Als Fasermaterial kommen auch hier insbesondere Polyester-, Polyamid- oder Aramidsynthesefasern in Betracht, vorzugsweise Polyesterfasern. Die so erhaltenen fluorpolymerbeschichteten Garne weisen neben den für die Synthesefasern charakteristischen hohen mechanischen Festigkeitswerten eine besonders gleitfähige, chemikalienbeständige und schmutzabweisende Oberfläche auf.

Besonders wertvoll erweisen sich erfindungsgemäße Fluorpolymerzubereitungen zum Bonden von Nähgarn. Hierunter ist die flexible Verbindung der Einzelfilamente des Garns durch die Fluorpolymerbeschichtung zu verstehen. Die so hergestellten, gebondeten Nähgarne weisen eine besonders hohe Festigkeit und hervorragende nähtechnische Eigenschaften auf. Besonders vorteilhaft wirkt sich hierbei aus, daß der überaus inerte Fluorpolymerüberzug seine bondierende Wirkung weder durch Färbung noch durch das Aufbringen von Nähavivagen einbüßt.

Die erfindungsgemäßen beschichteten Fäden und das gebondete Nähgarn zeichnen sich ebenfalls dadurch aus, daß sie zumindest in der unmittelbar an die Faseroberfläche angrenzenden Fluorpolymerenschicht einen oder mehrere haftvermittelnde Bestandteile aufweisen, die sich von einer mindestens zwei Isocyanatgruppen aufweisenden organischen Verbindung ableiten und daß die Fluorpolymerenbeschichtung eine solche Haftfestigkeit aufweist, daß durch mechanische Beanspruchung wie sie bei der Weiterverarbeitung der Fäden oder dem bestimmungsgemäßen Gebrauch des Nähgarns, wie z.B. beim Umspulen, Verweben oder Verwirken oder beim Nähvorgang auftreten, kein Ablösen der Fluorpolymerenbeschichtung verursacht wird.

Die folgenden Ausführungsbeispiele veranschaulichen die Herstellung einer erfindungsgemäßen Fluorpolymerenzubereitung und ihre Applikation auf Garn und flächenförmigen Textilmaterialien.

### Beispiel 1

500 g einer handelsüblichen, 50 gew.-%igen wäßrigen Paste eines Fluor-Copolymerisats aus Tetrafluorethylen, Hexafluorpropylen und Vinyl-difluorid (^{(R)}Hostaflon TFB X 7900 der Hoechst AG) enthaltend 2 Gew.-% eines Verdickers auf Basis eines Acrylatpolymerisats und 15 g feinst pulverisiertes 1,3-Bis-(4-methyl-3-isocyanatophenyl)-1,3-diazacyclobutan-2,4-dion (z.B. Desmodur TT der Bayer AG) werden in einem Kneter 15 Minuten bei 20-25°C geknetet und abgefüllt. Man erhält so eine pastenförmige Fluorpolymerzubereitung, die sich ausgezeichnet zur Beschichtung von Textilmaterialien (Garn oder flächenförmigem Material) aus Synthesefasern eignet. Sie enthält 48,5 Gew.-% Fluorpolymer, 2,9 Gew.-% der Di-isocyanato-Verbindung und 1,9 Gew.-% Verdicker. Die Zubereitung kann auch mit gutem Erfolg als Grundstrich bei der Beschichtung der Textilmaterialien eingesetzt werden, auf den dann gut haftende Fluorpolymerdeckstriche mit handelsüblichen Fluorpolymerpasten oder -Dispersionen aufgebracht werden können.

### Beispiel 2

In 315 ml entsalztes Wasser werden bei 40°C 10 g eines Netz- und Dispergiermittels auf Basis eines oxäthylierten Alkylphenols unter kräftigem Rühren gelöst. Anschließend werden unter Rühren 175 g eines fein gemahlenen Fluor-Copolymerisats aus 55 Gew.-% Tetrafluorethylen, 15 Gew.-% Hexafluorpropylen und 30 Gew.-% Vinylidenfluorid langsam eingetragen. Man rührt noch bis zur vollständigen Homogenisierung der Dispersion weiter und füllt sie dann ab. Die erhaltene 35 gew.-%ige wäßrige Fluorpolymeren-Zubereitung eignet sich hervorragend zur Tauchimprägnierung und Beschichtung von flächenförmigen Textilmaterialien und insbesondere von Garnen aus Synthesefasern.

### Beispiel 3

### Beschichtung eines Polyestergewebes

Ein Polyestergewebe 220 g/m², 9/9 Fd/cm, 1100 dtex wird zunächst mit folgendem Haftstrich versehen:
Eine Fluorpolymer-Paste gemäß Beispiel 1 wird im Streichverfahren mittels Luftrakel oder Gummituchrakel in einer Auftragsmenge von jeweils 60-80 g/m² auf beide Gewebeseiten aufgebracht.
Das Material wird sodann 2 Minuten bei 210°C gesintert. Der Deckstrich erfolgt mit einer ^{(R)}Hostaflon TFB X 7900 Paste (wäßrige Fluorpolymerenpaste) 50 %ig, die nach Wunsch noch pigmentiert oder flammhemmend ausgerüstet sein kann (z.B. durch Zusatz von 5 % TiO₂ und/oder 10 % Sb₂O₃ bezogen auf festes Fluorpolymer). Diese Rezeptur wird im Streichverfahren mit Stahlwalzenrakel oder Gummituchrakel in mehreren Stricken aufgebracht (z.B. Vorderseite 6, Rückseite 4 Striche) wobei nach jedem Strich eine Zwischentrocknung 2 Minuten bei 210°C erfolgt.
Insgesamt beträgt die Auftragsmenge auf der Gewebevorderseite 300 g/m² und auf der Rückseite 160 g/m².

Nach dem Aufbringen des letzten Strichs erfolgt die Aussinterung bei 210°C mit einer Verweilzeit von 10 Minuten. Anschließend wird die Oberfläche der Vorderseite mittels Kalander geprägt.
Die erreichte Haftfestigkeit beträgt 20,7 daN/5 cm.

Setzt man in diesem Beispiel eine Fluorpolymerpaste ein, die keine Diisocyanatoverbindung enthält, die jedoch im übrigen die Zusammensetzung der in Beispiel 1 hergestellten Paste aufweist und arbeitet exakt unter den oben angegebenen Applikationsbedingungen, so mißt man an dem beschichteten Gewebe eine Haftfestigkeit von 9,1 daN/5 cm auf der Vorderseite und 6,9 daN/5 cm auf der Rückseite.

### Beispiel 4

- Gewebe:: wie Beispiel 3.
- Haftstrich:: wie Beispiel Nr. 3, wobei der Haftstrich bei 210°C mit einer Verweilzeit von 10 Minuten ausgesintert wird.
- Deckbeschichtung:: wie bei Beispiel 3.
- Erreichte Haftfestigkeit:: 30,2 daN/5 cm.

### Beispiel 5

Gewebe: wie Beispiel 3.
Haftstrich: wie bei Beispiel Nr. 4.
Deckbeschichtung: Rezeptur: Hostaflon® TFB X 7100 Schmelzgranulat + 5 % TiO₂ + 10 % Sb₂O₃ + 1 % Hoechst Wachs OP.
Applikationsverfahren: Walzenschmelzanlage.

| | | |
|---|---|---|
| Auftragsmenge: | Vorderseite | 300 g/m², |
| | Rückseite | 160 g/m² |

Verarbeitungsbedingungen:
Walzentemperaturen: 205°C,
Vorwärmwalze: 150°C, IR-Strahler: 90 %,
Maschinengeschwindigkeit: 3 m/Minute,
Gummiwalzendruck: 7 bar,

| | | |
|---|---|---|
| Filmgewicht: | Vorderseite | 300 g/m², |
| | Rückseite | 160 g/m². |

Erreichte Haftfestigkeit: 21,5 daN/5 cm.

### Beispiel 6

### Bondierung eines Nahfädens

Ein schwarz gefärbtes Fadenmaterial dtex 266 f 64 x 3 aus Polyethylenterephthalat wird in einer Zubereitung gemäß Beispiel 1 durch Tauchen auf eine Auftragsmenge von 15 - 20 Gew.-% (Trockenauftrag bezogen auf Fadengewicht) imprägniert.
Der imprägnierte Faden wird anschließend mindestens 60 s lang in einem auf 220°C erhitzten Ofen warm behandelt. Der erhaltene Nähfaden zeigt keine Nuancenveränderung und keine Migration des Farbstoffs in die Bondierung. Er erbringt sehr gute Nähergebnisse auch bei hoher Beanspruchung z.B. auf Industrienähmaschinen. Weder beim Umspulen noch beim Nähen zeigt sich ein Abrieb und auch nach längerer Lagerzeit auf der Spule erfolgt kein Verkleben der Fadenlagen.

In analoger Weise kann die oben beschriebene Tauchimprägnierung auch mit einer handelsüblichen 35%igen Fluorpolymeren-Dispersion (^{(R)}Hostaflon TFB X 7100 der Hoechst AG) erfolgen, in die zuvor 1,5 Gew.-% 1,3-Bis-(4-methyl-3-isocyanato-phenyl)-1,3-diazacyclobutan-2,4-dion (z.B. ^{(R)}Desmodur TT der Bayer AG) homogen eingearbeitet worden ist.

Zur Qualitätsprüfung wird der hergestellte Nähfaden einem harten Nähtest unterworfen, wie er in der DE-OS 34 31 834 beschrieben ist.
Der Faden wird dabei unter folgenden Bedingungen vernäht: Industrienähmaschine Pfaff 363, Sticklänge 1 mm, Zickzack-Naht 8 mm Breite, 3250 Hübe/Minute, 200 cN Vorspannung, 4 Lagen Baumwollköper. Der erfindungsgemäß bondierte Faden erlaubt dabei im Mittel über 4000 Stiche ohne Fadenriß, ein unbondierter Faden gestattet in Mittel nur ca. 300 Stiche.

## Patentansprüche

1. Wäßrige Fluorpolymerzubereitungen enthaltend in feiner Verteilung 25 bis 60 Gew.-% eines Fluorpolymers, 1 bis 5 Gew.-% einer mindestens zwei Isocyanatgruppen aufweisenden organischen Verbindung und gegebenenfalls bis zu 10 Gew.-% Hilfs- oder Zusatzstoffe.

2. Wäßrige Fluorpolymerzubereitung gemäß Anspruch 1, dadurch gekennzeichnet, daß das Fluorpolymer mindestens 40 Gew.-% Tetrafluorethylen-Baugruppen aufweist.

3. Wäßrige Fluorpolymerzubereitung gemäß mindestens einem der Ansprüche 1 und 2, dadurch gekennzeichnet, daß das Fluorpolymer 40 bis 60 Gew.-% Tetrafluorethylenbaugruppen 10 bis 30 Gew.-% Hexafluorpropylenbaugruppen und 20 bis 40 Gew.-% Vinylidenfluoridbaugruppen aufweist.

4. Wäßrige Fluorpolymerzubereitung gemäß mindestens einem der Ansprüche 1 bis 3, dadurch gekennzeichnet, daß die mindestens zwei Isocyanatgruppen aufweisende organische Substanz 2 bis 4 Isocyanatgruppen enthält.

5. Wäßrige Fluorpolymerzubereitung gemäß mindestens einem der Ansprüche 1 bis 4, dadurch gekennzeichnet, daß die mindestens zwei Isocyanatgruppen aufweisende organische Verbindung ein Derivat des Di-isocyanato-toluols oder ein Tris-(isocyanatoalkyl)-biuret ist.

6. Wäßrige Fluorpolymerzubereitung gemäß mindestens einem der Ansprüche 1 bis 5, dadurch gekennzeichnet, daß die mindestens zwei Isocyanatgruppen aufweisende organische Verbindung das Dimerisationsprodukt oder das Trimerisationsprodukt des 2,4-Di-isocyanato-toluols ist.

7. Wäßrige Fluorpolymerzubereitung gemäß mindestens einem der Ansprüche 1 bis 6, dadurch gekennzeichnet, daß sie als Hilfs- oder Zusatzstoffe, Netzmittel, Dispergiermittel und/oder Stabilisatoren enthält.

8. Deckstrichgemisch bestehend auf einer wäßrigen Fluorpolymerzubereitung gemäß Anspruch 1 und bis zu 25 Gew.-% anwendungsspezifischer Mischungskomponenten.

9. Verfahren zur Herstellung einer wäßrigen Fluorpolymerzubereitung des Anspruchs 1, dadurch gekennzeichnet, daß man zur Herstellung von 100 Gewichtsteilen der Zubereitung
25 bis 60 Gewichtsteile des Fluorpolymeren
1 bis 5 Gewichtsteile der mindestens zwei Isocyanatgruppen aufweisenden organischen Verbindung und gegebenenfalls
bis zu 10 Gewichtsteile weitere Hilfs- oder Zusatzstoffe in feiner Verteilung mit der diese Bestandteile auf 100 Gewichtsteile ergänzenden Menge Wasser in einem geeigneten Mischaggregat homogenisiert.

10. Verfahren gemäß Anspruch 9, dadurch gekennzeichnet, daß man in eine wäßrige Fluorpolymersuspension oder Fluorpolymerpaste die gegebenenfalls weitere Hilfs- oder Zusatzstoffe enthält, 1 bis 5 Gew.-%, bezogen auf das Endgewicht der Mischung der mindestens zwei Isocyanatgruppen enthaltenden organischen Substanz in feiner Verteilung einarbeitet und homogenisiert.

11. Verwendung der wäßrigen Fluorpolymerenzubereitung des Anspruch 1 zum Beschichten von Garn und textilen Flächengebilden aus gefärbten oder ungefärbten, glatten oder texturierten synthetischen Filamenten oder Fasern.

12. Verwendung gemäß Anspruch 11, dadurch gekennzeichnet, daß ein Garn oder textiles Flächengebilde aus Polyesterfasern beschichtet wird.

13. Verwendung der wäßrigen fluorpolymeren Zubereitung des Anspruch 1 zum Bondieren von Nähgarn.

14. Mit Fluorpolymeren beschichtetes textiles Flächengebilde aus Synthesefasern, dadurch gekennzeichnet, daß zumindest die unmittelbar an die Faseroberfläche angrenzende Fluorpolymerenschicht einen oder mehrere haftvermittelnde Bestandteile aufweist, die sich von einer zwei oder mehrere Isocyanatgruppen aufweisenden organischen Verbindung ableiten und daß die Haftfestigkeit der Fluorpolymerschicht gemessen in Anlehnung an DIN 53 530 mindestens 10 daN/5 cm beträgt.

15. Mit Fluorpolymeren beschichtetes Garn aus synthetischen Fasern oder Filamenten, dadurch gekennzeichnet, daß zumindest die unmittelbar an die Faseroberfläche angrenzende Fluorpolymerenschicht einen oder mehrere haftvermittelnde Bestandteile aufweist, die sich von einer mindestens zwei Isocyanatgruppen aufweisenden organischen Verbindung ableiten und daß die Fluorpolymerenbeschichtung eine solche Haftfestigkeit aufweist, daß durch mechanische Beanspruchung wie sie bei der Weiterverarbeitung der Fäden auftreten, kein Ablösen der Fluorpolymerenbeschichtung verursacht wird.

16. Mit Fluorpolymeren gebondetes Nähgarn, dadurch gekennzeichnet, daß zumindest die unmittelbar an die Faseroberfläche angrenzende Fluorpolymerenschicht einen oder mehrere haftvermittelnde Bestandteile aufweist, die sich von einer mindestens zwei Isocyanatgruppen aufweisenden organischen Verbindung ableiten und daß die Fluorpolymerenbeschichtung eine solche Haftfestigkeit aufweist, daß durch mechanische Beanspruchungen wie sie beim Nähvorgang auftreten, kein Ablösen der Fluorpolymerenbeschichtung verursacht wird.

## Claims

1. An aqueous fluoropolymer formulation containing in finely divided form from 25 to 60% by weight of a fluoropolymer, from 1 to 5% by weight of an organic compound having at least two isocyanate groups and, optionally, up to 10% by weight of an auxiliary or additive substance.

2. The aqueous fluoropolymer formulation as claimed in claim 1, wherein the fluoropolymer has at least 40% by weight of tetrafluoroethylene units.

3. The aqueous fluoropolymer formulation as claimed in at least one of claims 1 and 2, wherein the fluoropolymer has from 40 to 60% by weight of tetrafluoroethylene units, from 10 to 30% by weight of hexafluoropropylene units and from 20 to 40% by weight of vinylidene fluoride units.

4. The aqueous fluoropolymer formulation as claimed in at least one of claims 1 to 3, wherein the organic substance which has at least two isocyanate groups contains from 2 to 4 isocyanate groups.

5. The aqueous fluoropolymer formulations as claimed in at least one of claims 1 to 4, wherein the organic compound which has at least two isocyanate groups is a derivative of diisocyanatotoluene or is a tris(isocyanatoalkyl)biuret.

6. The aqueous fluoropolymer formulation as claimed in at least one of claims 1 to 5, wherein the organic compound which has at least two isocyanate groups is the dimerization or trimerization product of 2,4-diisocyanatotoluene.

7. The aqueous fluoropolymer formulation as claimed in at least one of claims 1 to 6, wherein there is present as an auxiliary or additive substance a wetting agent, a dispersant and/or a stabilizer.

8. A topcoating mixture comprising an aqueous fluoropolymer formulation as claimed in claim 1 and up to 25% by weight of blending components specific to the intended use.

9. A process for preparing an aqueous fluoropolymer formulation of claim 1, which comprises homogenizing, if 100 parts by weight of the formulation are to be prepared, from 25 to 60 parts by weight of the fluoropolymer, from 1 to 5 parts by weight of the organic compound which has at least two isocyanate groups and, optionally, up to 10 parts by weight of a further auxiliary or additive substance in finely divided form with an amount of water which brings the total amount up to 100 parts by weight, in a suitable mixing apparatus.

10. The process as claimed in claim 9, wherein from 1 to 5% by weight, based on the final weight of the mixture, of the organic substance which contains at least two isocyanate groups is incorporated in finely divided form into an aqueous fluoropolymer suspension or fluoropolymer paste which may contain a further auxiliary or additive substance, and the mixture is homogenized.

11. The use of the aqueous fluoropolymer formulation of claim 1 for coating yarn and textile sheet materials made of dyed or undyed, flat or textured synthetic filaments or fibers.

12. The use as claimed in claim 11, wherein a yarn or textile sheet material made of polyester fibers is coated.

13. The use of the aqueous fluoropolymer formulation of claim 1 for the bonding of sewing yarn.

14. A fluoropolymer-coated textile sheet material made of synthetic fibers, wherein at least the fluoropolymer layer immediately adjoining the fiber surface has one or more adhesion-promoting constituents which are derived from an organic compound which has two or more isocyanate groups and the adhesive strength of the fluoropolymer layer as measured in line with DIN 53 530 is at least 10 daN/5 cm.

15. A fluoropolymer-coated yarn made of synthetic fibers or filaments, wherein at least the fluoropolymer layer immediately adjoining the fiber surface has one or more adhesion-promoting constituents which are derived from an organic compound which has at least two isocyanate groups and the fluoropolymer coating has such adhesive strength that it does not become detached due to mechanical stress such as experienced in the further processing of the yarn.

16. A fluoropolymer-bonded sewing yarn, wherein at least the fluoropolymer layer immediately adjoining the fiber surface has one or more adhesion-promoting constituents which are derived from an organic compound which has at least two isocyanate groups and the fluoropolymer coating has such adhesive strength that it does not become detached due to mechanical stresses as experienced in the course of sewing.

## Revendications

1. Préparations aqueuses de polymères fluorés qui contiennent à l'état finement divisé de 25 à 60% en poids d'un polymère fluoré, de 1 à 5% en poids d'un composé organique ayant au moins deux groupes isocyanate et le cas échéant jusqu'à 10% en poids d'adjuvants ou additifs.

2. Préparation aqueuse de polymères fluorés selon la revendication 1, caractérisée en ce que le polymère fluoré comporte au moins 40% en poids de groupes structuraux de tétrafluoréthylène.

3. Préparation aqueuse de polymères fluorés selon au moins une des revendications 1 et 2, caractérisée en ce que le polymère fluoré comporte de 40 à 60% en poids de groupes de tétrafluoréthylène, de 10 à 30% de groupes d'hexafluoropropylène et de 20 à 40% de groupes de fluorure de vinylidène.

4. Préparation aqueuse de polymères fluorés selon au moins une des revendications 1 à 3, caractérisée en ce que la substance organique présentant au moins deux groupes isocyanate contienne de 2 à 4 groupes isocyanate.

5. Préparation aqueuse de polymères fluorés selon au moins une des revendications 1 à 4, caractérisée en ce que le composé organique présentant au moins deux groupes isocyanate est un dérivé du di-isocyanato-toluène ou un tris-(isocyanatoalkyl)-biuret.

6. Préparation aqueuse de polymères fluorés selon au moins une des revendications 1 à 5, caractérisée en ce que le composé organique présentant au moins deux groupes isocyanate est le produit de dimérisation ou le produit de trimérisation du 2,4-diisocyanatotoluène.

7. Préparation auqueuse de polymères fluorés selon au moins une des revendications 1 à 6, caractérisée en ce qu'elle contient comme adjuvants ou additifs des agents mouillants, dispersants et/ou stabilisants.

8. Produit de revêtement formé d'une préparation aqueuse de polymères fluorés selon la revendication 1 avec jusqu'à 25% en poids de composants spécifiques de l'emploi envisagé.

9. Procédé de préparation d'une préparation aqueuse de polymères fluorés selon la revendication 1, procédé caractérisé en ce que pour obtenir 100 parties en poids de la préparation on homogénéise dans un appareil de mélange approprié, à l'état finement divisé, 25 à 60 parties en poids du polymère fluoré, 1 à 5 parties du composé organique présentant au moins deux groupes isocyanate et le cas échéant jusqu'à 10 parties d'autres adjuvants et additifs, avec la quantité d'eau pour compléter ces constituants à 100 parties en poids.

10. Procédé selon la revendication 9, caractérisé en ce que dans une suspension ou une pâte aqueuse du polymère fluoré contenant éventuellement d'autres adjuvants ou additifs on introduit et on homogénéise à l'état finement divisé de 1 à 5%, rapporté au poids poids final du mélange, de substance organique contenant aux moins deux groupes isocyanate.

11. Utilisation d'une préparation aqueuse de polymères fluorés de la revendication 1 pour en enduire des fils ou articles textiles plats formés de filaments ou fibres svnthétiques, teints ou non, lisses ou texturés.

12. Utilisaton selon la revendication 11, caractérisé en ce que l'on enduit un fil ou un article textile plat en fibres d'un polyester.

13. Utilisation de la préparation aqueuse de polymères fluorés de la revendication 1 pour interlier des fils de couture.

14. Produits textiles plats en fibres synthétiques enduits d'un polymère fluoré, produits caractérisés en ce que au moins la couche du polymère fluoré qui se trouve à la limite de surface des fibres comprend un ou plusieurs agents d'adhérence provenant d'un composé organique présentant deux ou plusieurs groupes isocyanate, et en ce que l'adhérence de la couche du polymère fluoré, déterminée d'après la norme DIN 53 530, est d'au moins 10 daN/5 cm.

15. Fils de fibres ou filaments synthétiques enduits d'un polymère fluoré, caractérisés en ce que au moins la couche du polymère fluoré qui se trouve à la limité de surface des fibres comprend un ou plusieurs agents d'adhérence provenant d'un composé organique présentant au moins deux groupes isocyanate, et en ce que l'enduit du polymère fluoré a une adhérence telle qu'à la suite d'une sollicitation mécanique, comme elle peut se produire lors du traitement ultérieur des fils, il n'y ait aucune élimination de l'enduit.

16. Fil à coudre interlié avec des polymères fluorés, fil caractérisé en ce que au moins la couche du polymère fluoré qui se trouve à la limite de surface des fibres comprend un ou plusieurs agents d'adhérence provenant d'un composé organique présentant au moins deux groupes isocyanate, et en ce que l'enduit du polymère fluoré a une adhérence telle qu'à la suite d'une sollicitation mécanique, comme elle peut se produire à la couture, il n'y ait aucune élimination de l'enduit.
